# EUROPEAN PATENT APPLICATION

(11) **EP 1 332 935 A2**
(43) Date of publication of application: **06.08.2003**
(21) Application number: 02380255.6
(22) Date of filing: 10.12.2002
(51) Int. Cl.: B60S 1/52, B60R 19/18

(54) **Bumper with headlamp washer for motor vehicles**

(30) Priority: 01.02.2002 ES 200200256 U
(71) Applicant: Seat, S.A., 08040 Barcelona (ES)
(72) Inventor: Fernandez Gomez, Antonio, 08040 Barcelona (ES)
(74) Representative: Davila Baz, Angel

(57) **Abstract**

Bumper with headlamp washer for motor vehicles, which comprises a resistant frame (1) and an external coating skin (2) and has mounted on the rear a retractable headlamp washer, extractable through an opening in the frame and skin which is closed by means of a cover. The aforementioned headlamp washer is housed in a cylindrical casing (4) which is open on one of its bases (5), from which base extend external flaps (6) shaped to be coupled between the frame and skin, adapted to the surface of said frame to guarantee the immobilization of the casing. The open base of said casing is centred and coincident with respect to the openings of the frame and skin and the cover closing said opening being connected to headlamp washer (8).

## Description

The present invention relates to a bumper with headlamp washer for motor vehicles, of the type constituted by a resistant frame and an external coating skin which defines the visible surface of the bumper.

Traditionally, the headlamp washer comes mounted in the bumper behind the same, said headlamp washer being extractable, each time it has to operate on the surface of the headlamp, through an opening present in the bumper, both in the frame and in the skin. When the headlamp washer is not in use, it is retracted to the rear position, in which it is located behind the bumper. In this situation the opening in the bumper is closed by means of a cover.

The construction expounded presents problems of adapting, levelling and centring the cover with respect to the opening in the bumper. These problems can be due to deviations in the position of the headlamp washer, with respect to the bumper, as a consequence of different sizes of the pieces, assembly or production spread and dilation between said pieces.

The object of the present invention is to eliminate the problems expounded, so that centring and levelling of the headlamp washer covers are achieved in the skin of the bumper, without deviations occurring between the cover and the front opening of the bumper, when the headlamp washer is in its retracted position.

In accordance with the present invention, the headlamp washer is housed in a cylindrical casing which is open on one of its bases, from which base extend external flaps that are shaped for coupling between the frame and skin of the bumper, being adapted to the front surface of said frame.

The cylindrical casing is mounted so that the openings of the frame and skin are centred with respect to said casing.

Moreover, the cover that will close the opening in the bumper, when the headlamp washer is in its retracted position, is fastened to or connected with the headlamp washer, so that when the latter is extracted to proceed to the cleaning of the surface of the headlamp, the cover is separated from the opening of the casing, whilst on displacing the headlamp washer toward its retracted position, the cover is coupled exactly over the open base of the cylindrical casing. As this casing coincides with the opening of the frame and skin of the bumper, a perfect fit and an exact coincidence will be achieved between the cover and the opening in the bumper.

The constitution expounded allows, on one hand, an exact positioning of the cylindrical casing of the bumper and, on the other, a centring and positioning of the headlamp washer with respect to the casing, so turning of the latter is avoided, so that perfect performance thereof will be achieved, on the surface of the headlamp during the cleaning operation, and a perfect coupling of the cover closing the opening in the bumper.

The characteristics and benefits expounded will be better understood through the following description, made with reference to the enclosed drawings, in which a non-restrictive example of embodiment is explained.

In the drawings:
Figure 1 is a schematic cross-section of a bumper with headlamp washer, incorporated in accordance with the invention.
Figure 2 is a front perspective of the cylindrical casing in which the headlamp washer is mounted.
Figure 3 is a rear perspective of the same casing.

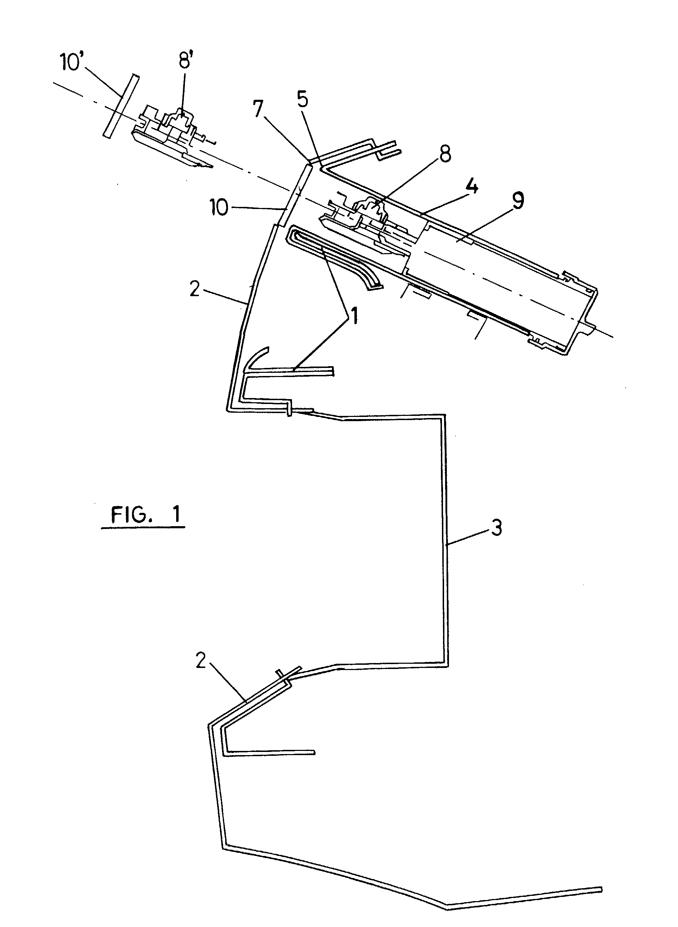

Figure 1 shows a schematic cross-section of a bumper incorporated in accordance with the invention. This bumper includes a resistant frame, preferably of plastic, which is referred to with the number 1, and an external coating skin 2 which will define the visible surface.

In the example represented in the drawings, the external skin has a large opening in which a box 3 is coupled for the headlamp.

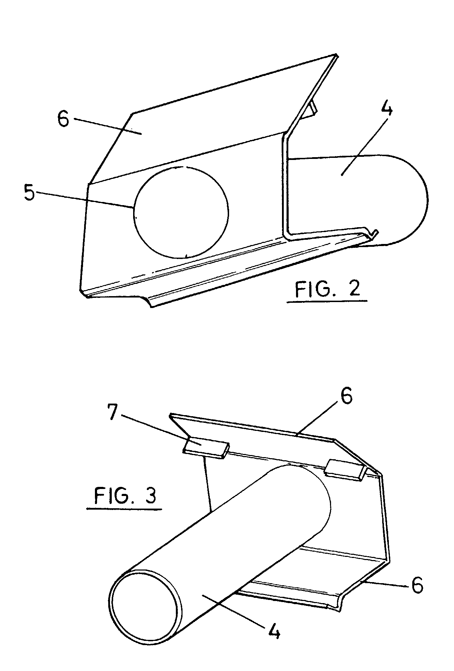

In accordance with the present invention, the bumper of the invention has a cylindrical casing 4 mounted on the rear which is represented in figures 2 and 3. This casing is open through one of its bases 5, from which extend flaps 6 which are shaped to coincide with the profile of the bumper and which are coupled between frame 1 of the bumper and external skin 2 thereof.

Flaps 6 can have lugs 7 to assure their securing to frame 1 of the bumper.

In coincidence with open base 5 of casing 4, the bumper has, in skin 2 and also when appropriate in frame 1, an opening 7, which is located inside the box and cavity 3 for the headlamp. Inside casing 4 is housed a headlamp washer 8 with the corresponding operating mechanism, all of this of well-known constitution.

Headlamp washer 8 can occupy a retracted position, inside casing 4, or an extracted position, which is referred to with the number 8', in which it is in position to act on the surface of the headlamp mounted in box 3.

When headlamp washer 8 is in the retracted position, opening 7 can be closed by means of a cover 10 which is linked or connected to the headlamp washer 8 or, so that when the latter goes to extracted position 8', the cover is located in position 10'.

The constitution expounded allows on one hand a secure positioning of casing 4 with respect to the bumper, due to the assembly system thereof between frame 1 and skin 2, allowing a perfect coincidence to be achieved between open base 5 of casing 4 and opening 7 of the bumper.

Moreover, it is achieved that headlamp washer 8 and operating mechanism 9 thereof maintain a constant position with respect to casing 4.

Thus, as coincidence exists between open base 5 and opening 7 and a correct and exact positioning of headlamp washer 8, it is achieved that cover 10 in the closed position occupies a position completely coincident with opening 7, without displacements or deviations with respect thereto.

In this way the quality conditions demanded in the finish are fulfilled and in motor vehicles as a whole which require continuous improvements in design, finish and concept.

## Claims

1. Bumper with headlamp washer for motor vehicles which comprises a resistant frame (1) and an external coating skin (2) and has mounted on the rear a retractable headlamp washer, extractable through an opening of the frame and skin which is closed by means of a cover, **characterised in that** the aforementioned headlamp washer is housed in a cylindrical casing (4) which is open on one of its bases (5), from which base extend external flaps (6) shaped to be coupled between the frame and skin, adapted to the surface of said frame to guarantee the immobilization of the casing; the open base of said casing being centred and coincident with respect to the openings in the frame and skin and the cover for closing said opening being connected to the headlamp washer (8).
